# FASCICULE DE BREVET EUROPEEN

(11) **EP 3 012 540 B1**
(45) Date de publication et mention de la délivrance du brevet: **13.09.2017**
(21) Numéro de dépôt: 15190702.9
(22) Date de dépôt: 21.10.2015
(51) Int. Cl.: F24D 19/08, F16K 17/04

(54) **DISPOSITIF DE RÉGULATION DE PRESSION EN PARTICULIER POUR RÉSERVOIR DE STOCKAGE D'EAU**
VORRICHTUNG ZUR DRUCKREGULIERUNG INSBESONDERE FÜR WASSERSPEICHERBEHÄLTER
PRESSURE CONTROL DEVICE, IN PARTICULAR FOR WATER STORAGE TANK

(30) Priorité: 21.10.2014 FR 1402363
(43) Date de publication de la demande: 27.04.2016
(73) Titulaire: Airindex, 37170 Chambray les Tours (FR)
(72) Inventeur: DA SILVA GOMES, Antonio, 37200 Tours (FR); ROCHETTE, Vincent, 69480 Anse (FR)
(74) Mandataire: Aquinov

(56) Documents cités:
- EP-A2- 2 620 679
- WO-A2-2010/129640

## Description

L'invention concerne un dispositif de régulation de pression pour réservoir d'un liquide tel qu'un ballon d'eau chaude.

L'invention sera plus particulièrement décrite en regard d'un réservoir d'eau, sans toutefois y être limitée, et pourrait s'appliquer à tout réservoir de liquide.

De manière connue, à un ballon d'eau chaude est associée une soupape de sécurité qui se déclenche en cas de surpression à l'intérieur dudit ballon. En effet, l'eau augmentant de volume lorsqu'elle chauffe, au-delà d'une certaine pression, cela entraîne le gonflement du ballon engendrant un risque de détérioration du ballon, voire même d'explosion. La soupape se déclenche, c'est-à-dire s'ouvre lorsqu'une valeur de seuil de pression est atteinte (usuellement de 6 à 7 bar), ce qui permet d'évacuer de l'eau qui usuellement va au tout à l'égout.

Par ailleurs, un ballon est parfois soumis à une dépression. Par exemple, lorsque l'on ferme l'alimentation en eau du ballon alors que l'on continue à puiser de l'eau dudit ballon, il se crée un vide intérieur entre la surface haute du volume d'eau et le haut du ballon. Cette dépression ainsi créée peut engendrer la déformation du ballon, voire même des déchirures et donc des fuites d'eau, qu'il convient bien entendu d'éviter.

Certains ballons fabriqués avec des matériaux du type polyuréthane expansé (notamment pour l'isolation thermique) disposé entre deux parois ne souffrent pas de ce problème, l'enveloppe épaisse de l'installation étant résistance à un vide relativement important. Cependant ces polyuréthanes expansés présentent le double inconvénient, de consommer des gaz du type CFC à effet de serre d'une part, et de ne pas optimiser le recyclage des enveloppes d'autre part.

Certains ballons présentent d'autres modes de fabrication qui sont bien moins résistants, engendrant également le risque de rétraction de la structure pouvant conduire à un dégât des eaux.

De plus, selon les structures enveloppantes des ballons, la déformation du ballon est peut être de suite visible spécialement au niveau des raccordements de tuyauterie.

Enfin, en raison des contraintes de recyclage des matériaux, les structures de ballon devraient à terme utiliser une isolation thermique dissociable des parois intérieure et extérieure du ballon imposant à la seule paroi intérieure de résister à des contraintes mécaniques. Néanmoins, au-delà d'un vide de plus de 300 mbar très vite atteint, il semble trop contraignant pour des raisons de coûts et d'agencement intérieur des ballons de proposer une structure résistante.

Par conséquent, on cherche à éviter l'inconvénient de déformation de la paroi d'un ballon, sans pour autant toucher à la structure/l'ossature du ballon.

De plus, il convient de trouver une solution qui puisse être mise en oeuvre pour les ballons déjà existants, soit peu encombrante, et ne soit pas trop visible extérieurement, en particulier pour empêcher l'utilisateur (le non-spécialiste) d'accéder au dispositif de sécurité, voire même empêcher l'installateur, du ballon combiné à ses accessoires, d'intervenir de manière intempestive sur ledit dispositif, ou tout simplement pour ne pas changer les habitudes des installateurs.

L'invention a donc pour but de remédier à l'inconvénient précité de déformation du ballon en cas de dépression intérieure, sans modifier la structure du ballon pour s'opposer à cette dépression, tout en proposant un dispositif peu coûteux à mettre en oeuvre, d'encombrement réduit, adaptable aux ballons existants et sans être voyant et accessible.

Par ailleurs, on connaît des soupapes de sécurité combinant les fonctions de surpression et d'anti-vide qui sont décrites dans le document EP2620679 relatif à un appareil de cuisson et le document WO2010129640 relatif à un réservoir à gaz notamment pour paintball. Cependant, on cherche à rendre encore plus compact un dispositif de régulation de pression et faciliter son installation, en particulier pour des ballons d'eau chaude.

Selon l'invention, le dispositif de régulation de pression pour réservoir d'eau comporte une chambre de détente dotée d'un orifice d'entrée et d'un orifice de sortie, une soupape de sûreté de surpression qui obture l'orifice de sortie de ladite chambre et est apte à ouvrir ledit orifice de sortie en cas de surpression détectée, et un conduit d'évacuation associé à la soupape de surpression qui communique avec la chambre lorsque l'orifice de sortie de cette dernière est ouvert, et comporte en outre une soupape anti-vide associée à la chambre de détente et est apte à permettre l'introduction d'air dans ladite chambre en cas de détection de dépression, le dispositif présentant un corps dans lequel sont agencés la chambre de détente, le conduit d'évacuation, la soupape de surpression et la soupape anti-vide, le corps formant un ensemble unitaire (monobloc) de façon à fournir un dispositif prêt à l'installation, et est caractérisé en ce que la soupape de surpression est agencée dans le corps selon un alignement avec la chambre de détente, tandis que le conduit d'évacuation est disposé angulairement, par rapport à l'axe d'agencement de la soupape de surpression et de la chambre.

Les termes « surpression » et « dépression » s'entendent au regard de la pression régnant dans un réservoir d'eau lorsque le dispositif est associé audit réservoir à sécuriser. On entend par « surpression », une valeur de pression dans le réservoir d'eau qui est supérieure à une valeur seuil de pression pour laquelle la soupape de surpression est tarée, par exemple 6 bar (6.10⁵ Pa), et par « dépression », une valeur de pression dans le réservoir d'eau qui est inférieure à la pression atmosphérique (pression régnant extérieurement au réservoir d'eau).

Les soupapes de surpression et de dépression fonctionnent séparément. Le dispositif de l'invention est ainsi très avantageux. Il procure dans un même dispositif deux fonctions distinctes, la protection du réservoir en cas de détection, respectivement, de surpression et de dépression.

Ainsi, le dispositif proposé fournit un ensemble unitaire, monobloc qui est prêt à l'installation, procure les deux fonctions de protection de surpression et de dépression, tout en étant peu encombrant.

De préférence, le corps du dispositif formant un ensemble unitaire ne présente qu'une seule entrée et qu'une seule sortie. L'entrée est destinée à être raccordée au réservoir, tandis que la sortie est destinée à être raccordée à une évacuation d'eau, par exemple une canalisation vers le tout à l'égout, qui constitue avantageusement également une arrivée d'air. En outre, le conduit d'évacuation est avantageusement le conduit d'introduction d'air. En d'autres termes, le conduit d'évacuation présente la fonction d'écoulement d'eau depuis la chambre vers l'extérieur du dispositif, et également d'alimentation en air depuis l'extérieur du dispositif vers la chambre.

Par conséquent, tout en fournissant deux fonctions, le dispositif est compact et très aisé d'installation de façon identique aux dispositifs existants, et alors même que ces derniers ne comportent qu'une fonction de régulation de surpression.

Ainsi, seuls deux raccords sont à effectuer, un raccord au réservoir d'eau et un raccord à une évacuation d'eau qui peut être une canalisation vers le tout à l'égout ou autre. La canalisation d'évacuation de l'eau branchée sur le tout à l'égout sert avantageusement de canalisation d'acheminement d'air lorsqu'il s'agit d'introduire de l'air dans la chambre de détente et donc dans le réservoir d'eau en cas de dépression détectée.

Par ailleurs, les soupapes de dépression et anti-vide sont intégrées au corps monobloc du dispositif de sorte à être partiellement ou totalement invisibles depuis l'extérieur du corps, et inaccessibles au démontage pour l'utilisateur.

Ainsi, il n'y a aucun risque que l'utilisateur tente de démonter les soupapes ou ne fasse d'intervention intempestive sur le dispositif.

Selon une autre caractéristique, la soupape de surpression comporte un clapet de fermeture coopérant de manière étanche avec un siège formé par le rebord périphérique interne de la chambre de détente au niveau de l'orifice de sortie de ladite chambre, et un système mécanique à ressort assurant la mobilité du clapet, le ressort étant taré à une valeur seuil de pression au-delà de laquelle le ressort est apte à se comprimer pour ouvrir le clapet qui n'est alors plus en contact avec le siège

Selon une autre caractéristique, la soupape anti-vide comporte un clapet mobile, coopérant de manière étanche avec un siège en position de fermeture du clapet, et un système mécanique à ressort assurant la mobilité du clapet, le ressort étant apte à être comprimé pour ouvrir le clapet lorsque la pression atmosphérique est supérieure à la pression régnant dans le réservoir auquel est destiné à être associé le dispositif, la soupape anti-vide étant connectée avec la chambre de détente via un orifice d'accès agencée dans la paroi de la chambre.

La soupape anti-vide comporte deux extrémités distales, l'une comprenant le siège du clapet contre lequel ledit clapet s'applique, et l'autre opposée formée d'une ouverture, l'ouverture débouchant directement sur l'orifice d'accès de la chambre.

Dans un mode de réalisation du dispositif, le conduit d'évacuation d'eau est disposé perpendiculairement à l'axe d'agencement de la soupape de surpression et de la chambre.

De préférence, le conduit d'évacuation est agencé à proximité de l'orifice de sortie de la chambre de détente.

Dans un mode de réalisation du dispositif, le corps comporte deux logements d'accueil distincts pour respectivement la soupape de surpression et la soupape anti-vide.

Dans ce mode de réalisation à deux logements, le logement de la soupape anti-vide peut être disposé de différentes manières selon les contraintes d'accès et de montage du dispositif sur le réservoir (en particulier pour le passage des clés de serrage).

A titre d'exemple, le logement de la soupape anti-vide est constitué par le conduit d'évacuation d'eau. La soupape anti-vide est ainsi logée à l'intérieur du conduit d'évacuation d'eau.

Dans un autre exemple, la soupape anti-vide est agencée dans un logement d'accueil situé en prolongement et à l'opposé du conduit d'évacuation d'eau. Le logement d'accueil est fermé en son extrémité opposée au conduit d'évacuation. Un passage entre le logement d'accueil et le conduit d'évacuation d'eau est prévu pour l'arrivée d'air depuis conduit d'évacuation jusqu'à la soupape anti-vide. Cet exemple d'agencement permet ainsi de répondre à la norme britannique WRAS (en anglais, « Water Regulations Advisory Scheme »).

Dans un autre exemple encore, la soupape anti-vide est agencée dans un logement d'accueil situé perpendiculairement ou avec un angle quelconque par rapport au canal d'évacuation. Dans ce dernier cas également, le dispositif présente un passage entre le logement d'accueil et le conduit d'évacuation d'eau pour l'arrivée d'air jusqu'à la soupape anti-vide. Cet exemple d'agencement permet aussi de répondre à la norme britannique WRAS.

Dans toutes les variantes de réalisation, la soupape anti-vide communique d'un part, avec l'extérieur, via éventuellement des passages spécifiques ménagés à l'intérieur du corps du dispositif, et d'autre part avec la chambre de détente du dispositif.

Les soupapes de surpression et anti-vide peuvent être des soupapes du commerce.

Avantageusement, le dispositif comporte une poignée ou une tête rotative débrayable permettant d'agir manuellement sur la soupape de surpression afin de l'ouvrir pour des tests de fonctionnement ou vidanger le réservoir. A noter que cette poignée visible et constituant une commande éventuelle extérieure, est uniquement associée au système de régulation de surpression.

Le dispositif est avantageusement utilisé en étant raccordé par l'orifice d'entrée à un réservoir de liquide, en particulier un ballon d'eau chaude.

De préférence; le dispositif de l'invention est associé en partie inférieure du ballon d'eau chaude. On puise aisément l'air via le conduit du tout à l'égout auquel est raccordé le dispositif pour l'évacuation de l'eau. Cet agencement ne présente aucun risque de fuite d'eau.

Dans la plupart des installations, le dispositif de l'invention est couplé directement à un ballon d'eau chaude. Dans d'autres installations, en particulier dans des installations au Royaume-Uni, le dispositif de l'invention est couplé à un groupe de sécurité connu en soi et associé au ballon d'eau chaude, ce groupe de sécurité comprenant notamment un limiteur de pression au niveau de l'arrivée d'eau dans le ballon, un clapet anti-retour et un filtre.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue en perspective du dispositif de l'invention ;
- La figure 2 représente une vue en coupe d'un exemple de réalisation du dispositif de l'invention, alors qu'il n'y a ni surpression, ni dépression dans le réservoir auquel est destiné à être relié le dispositif;
- La figure 3 illustre la figure 2 lorsqu'une surpression est détectée ;
- La figure 4 illustre la figure 2 lorsqu'une dépression est détectée ;

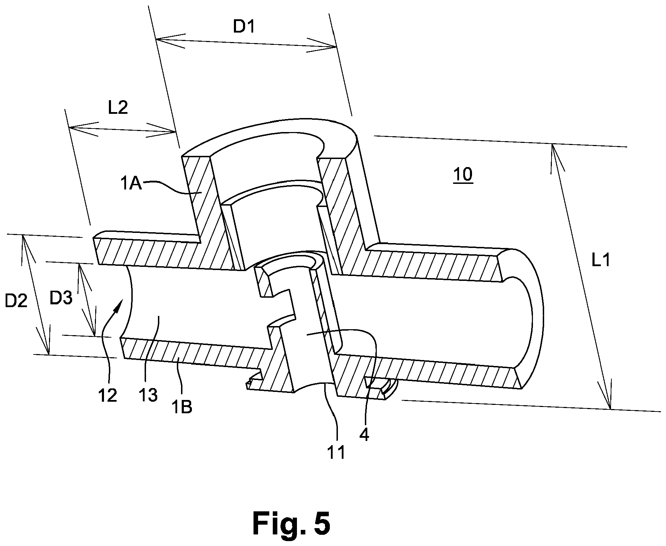

- La figure 5 est une vue en coupe du corps du dispositif de la figure 1 sans les soupapes et le chapeau de fermeture visibles sur la figure 1.

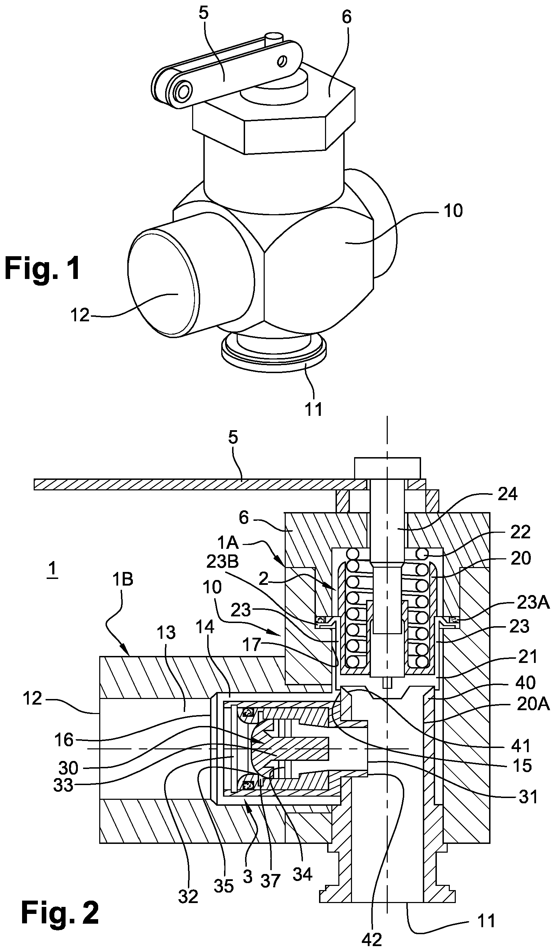

Le dispositif de régulation de pression 1 de l'invention illustré sur les figures 1 à 4 est destiné à être associé à un réservoir d'eau tel qu'un ballon d'eau chaude, ici non illustré.

Le dispositif 1 comporte plusieurs pièces détaillées plus loin qui une fois assemblées en usine forme un corps 10 monobloc qui est directement associé à la canalisation de sortie du réservoir d'eau ou à un groupe de sécurité qui serait associé au réservoir.

Le corps 10 comporte une entrée 11 et une sortie 12, l'entrée 11 étant destinée à être raccordée sur le réservoir d'eau tandis que la sortie 12 est destinée à être reliée à une canalisation constituant à la fois une canalisation d'évacuation d'eau et une canalisation d'introduction d'air.

L'entrée 11 est de préférence en saillie du reste du corps.

Le dispositif 1 de l'invention comporte :
- une soupape de surpression 2 destinée à s'ouvrir lorsque la pression dans le réservoir d'eau dépasse une valeur de seuil,
- une soupape anti-vide 3 destinée à s'ouvrir lorsque la pression dans le réservoir est inférieure à la pression atmosphérique,
- une chambre de détente 4 qui est destinée à accueillir une quantité d'eau du réservoir en étant reliée directement au réservoir via l'entrée 11 du dispositif, la chambre de détente étant en outre associée à la soupape de surpression 2 et à la soupape de dépression 3,
- un conduit d'évacuation 13 par lequel l'eau s'échappe hors du dispositif lorsque la soupape 2 est ouverte,
- des moyens d'introduction d'air associés à la soupape de dépression, aptes à introduire de l'air dans la soupape anti-vide 3 lorsque celle-ci est ouverte, et qui sont avantageusement ici formés par le conduit d'évacuation 13.

La soupape de surpression 2 est apte à assurer l'évacuation d'eau depuis la chambre 4 vers l'extérieur du dispositif lorsqu'une surpression est détectée dans le réservoir.

La soupape anti-vide 3 est apte en position ouverte à assurer l'introduction d'air dans la chambre 4 depuis l'extérieur du dispositif, puis dans le réservoir, lorsqu'une dépression est détectée dans le réservoir.

Le dispositif 1 de l'invention est un dispositif étanche à l'eau et l'air lorsque la soupape de surpression 2 et la soupape anti-vide 3 sont respectivement fermées. Les soupapes fonctionnement séparément. Lorsque l'une est ouverte, l'autre est systématiquement fermée.

La chambre de détente 4 forme une partie interne du corps 10 du dispositif. Elle est creuse. La chambre 4 est d'une part ouverte en permanence en débouchant sur l'entrée 11 du dispositif et d'autre part est fermée par les deux soupapes 2 et 3 et est apte à être ouverte ponctuellement lorsque l'une des soupapes s'ouvre.

La chambre 4 comporte un orifice d'entrée constitué par l'entrée 11 du dispositif, un orifice de sortie 41 fermé par la soupape de surpression 2 et, dans le mode de réalisation exemplifié ici, un orifice distinct 42 d'accès pour l'introduction d'air et fermé par la soupape anti-vide 3.

L'invention réside principalement en l'agencement dans un même dispositif à la fois, d'une première soupape de sûreté 2 constituant une soupape de surpression, apte à s'ouvrir en cas de détection dans le réservoir sur lequel est monté le dispositif d'une pression dépassant une valeur seuil (cas de surpression), et d'une seconde soupape 3 constituant une soupape anti-vide, apte à s'ouvrir en cas de détection dans ledit réservoir d'une pression inférieure à la pression atmosphérique extérieure au réservoir.

Les figures 2 à 4 illustrent un exemple d'agencement, nullement limitatif, des deux soupapes 2 et 3 dans le corps du dispositif. Ici, la soupape anti-vide 3 est disposée transversalement à la soupape de surpression 2. En outre, la soupape anti-vide 3 est agencée dans le conduit d'évacuation 13.

Il pourrait en être autrement notamment selon le volume disponible pour monter le dispositif sur le réservoir d'eau. La soupape anti-vide pourrait par exemple être agencée dans un logement conçu à l'opposé du conduit d'évacuation 13, ou perpendiculairement ou sensiblement perpendiculairement, ou encore avec un angle quelconque par rapport au conduit d'évacuation 13.

Le corps 10 du dispositif 1 est de forme générale en L dans l'exemple de réalisation. Il est par exemple en laiton. Le matériau est compatible en termes de coûts, de résistance et de mise en oeuvre. En variante, il peut être en un plastique technique, en polyamide (PA) du type PA6 ou PA6/6, ou en matériau composite tel qu'un polymère injecté et chargé en fibre de verre pour résister aux pressions d'épreuves. En fonction des quantités à produire et des coûts de fabrication, le corps principal peut être un assemblage de pièces usinées (par exemple en laiton décolleté) qui sont emmanchées et/ou collées. Le corps du dispositif peut également être en laiton matricé/usiné ou en plastique injecté.

Le corps 10 du dispositif comprend :
- la chambre de détente 4 de forme longitudinale et située dans l'une des ailes du L et au niveau du coin du L, cette chambre est destinée à accueillir une quantité d'eau lorsque le dispositif est monté sur le réservoir d'eau à protéger,
- une partie 1A formant l'une des ailes du corps et prolongeant la chambre 4, cette partie constituant un logement pour accueillir la soupape 2 de détection de surpression,
- une partie 1B formant l'autre aile du corps transversale à la partie 1A, cette partie constituant la conduite d'évacuation d'eau 13 et forme avantageusement dans cet exemple de réalisation le logement d'accueil de la soupape anti-vide 3.

Pour faciliter la connexion du dispositif au réservoir d'eau, l'extrémité distale de la chambre 4 opposée à la soupape de surpression 2 correspond à l'entrée 11 du dispositif et fait saillie du reste du corps 10 pour constituer une buse de raccordement.

Le dispositif 1 loge les deux soupapes de manière invisible pour l'utilisateur. L'ensemble du dispositif forme un ensemble monobloc tel qu'illustré sur la figure 1 qui est prêt au raccordement et est opérationnel dès son association au réservoir via l'entrée 11 et à une canalisation d'évacuation d'eau et d'entrée d'air via la sortie 12.

Par ailleurs, le dispositif 1 peut comporter de manière connue un robinet 5 du type levier ou tête rotative débrayable actionnable manuellement, extérieur au corps 10 et associé à la soupape de surpression 2. Ce robinet permet si besoin de vidanger manuellement le réservoir d'eau sur lequel est monté le dispositif 1, l'eau s'évacuant via la conduite 13.

La soupape de surpression 2 comporte de manière connue un clapet 20 doté d'un joint d'étanchéité 21, et un système mécanique à ressort 22 associé au clapet 20.

Le clapet 20 comporte à l'un de ses extrémités distale une surface de fermeture 20A telle qu'un disque et est doté du joint 21 de forme torique entourant la surface de fermeture. La surface de fermeture 20A du clapet et le joint 21 s'appuient en position fermée du clapet (figure 2) contre un siège 40 constitué par le rebord périphérique interne de l'extrémité distale de la chambre, opposée à l'entrée 11.

Le clapet 20 par sa surface de fermeture 20A ferme l'extrémité ouverte de la chambre 4 au niveau du rebord périphérique 40.

Le clapet 20 présente un corps cylindrique creux qui accueille le système mécanique à ressort 22. L'une des extrémités distales du corps cylindrique forme la surface de fermeture 20A.

Le système mécanique d'ouverture du clapet comporte le ressort 22. Le ressort 22 est associé au clapet 20 en étant logé dans le corps cylindrique dudit clapet, et en étant maintenu en butée d'une part contre le fond la surface de fermeture 20A et d'autre part à son opposé, contre la partie intérieure du logement 1A du corps 10 du dispositif formant un chapeau de fermeture 6 pour le corps du dispositif.

Le ressort 22 est taré selon la valeur seuil de pression souhaitée d'ouverture de la soupape.

Afin d'assurer une excellente étanchéité, un joint 23 s'étend de manière cylindrique contre la paroi interne du logement 1A autour du corps cylindrique du clapet et transversalement à la surface de fermeture du clapet 20A. Le joint 23 présente en outre des retours transversaux 23A et 23B, à l'opposé de la surface de fermeture 20A et contre lesquels s'appuie le chapeau de fermeture 6 fermant le logement 1A du dispositif.

Par ailleurs, le levier 5 de vidange manuelle est connecté à une tige 24, elle-même solidaire, par son extrémité distale opposée au levier, à la surface de fermeture 20A du clapet. En actionnant manuellement le levier 5, on tire sur la tige 24 ce qui soulève alors le clapet 20, décollant la surface de fermeture 20A du siège 40, ce qui ouvre la chambre 4 depuis laquelle l'eau peut s'écouler vers le conduit d'évacuation 13.

Le logement 1A accueillant la soupape de surpression 2 rejoint le conduit d'évacuation 13 via un canal 14 situé à l'angle d'intersection des parties 1A et 1B du dispositif. Le canal 14 est perpendiculaire à la paroi interne du logement 1A.

Le canal 14 présente (figure 2) une première terminaison 15 fermée par la paroi de la chambre 4 et le joint 23 et une seconde terminaison ouverte 16 débouchant dans le conduit 13.

En regard de la figure 2, lorsque le clapet 20 s'ouvre en cas de surpression, la surface de fermeture 20A n'est plus en contact avec le siège 40 de la chambre 4 ouvrant l'accès à la chambre 4 via l'orifice de sortie 41 de la chambre. L'eau stockée dans la chambre 4 s'introduit dans le logement 1A entre sa paroi interne 17 et le joint 23 du clapet, la partie 23A du joint empêchant l'eau de remonter au-delà vers le chapeau 6, puis s'écoule via l'extrémité 16 dans le canal 14 pour déboucher dans le conduit 13.

Enfin, le dispositif selon l'invention comporte la soupape anti-vide 3 à clapet de fermeture/ouverture 30.

Dans le mode de réalisation présenté, la soupape anti-vide 3 est logée à l'intérieur du conduit 13, et ne fait pas saillie vers l'extérieur.

Le corps de la soupape anti-vide 3 s'étend longitudinalement selon l'axe X à la partie 1B du corps 10 du dispositif, c'est-à-dire parallèlement au conduit 13. La soupape 3 comporte l'une de ses extrémités distales 31 qui est ouverte et est associée en débouchant à l'intérieur de la chambre de détente 4, tandis que son autre extrémité distale 32 ouverte débouche dans le conduit 13 en direction de l'extérieur du dispositif.

Le conduit 13 et la soupape anti-vide 3 sont dimensionnés de sorte à ménager longitudinalement un espace entre la paroi interne du logement 1B du conduit 13 et le corps de la soupape 3 pour constituer le canal d'évacuation 14.

La soupape anti-vide 3 comporte un clapet 30 mobile via un ressort 34 et fermant ou ouvrant la soupape en fonction de la pression régnant à l'intérieur du réservoir d'eau par rapport à la pression atmosphérique.

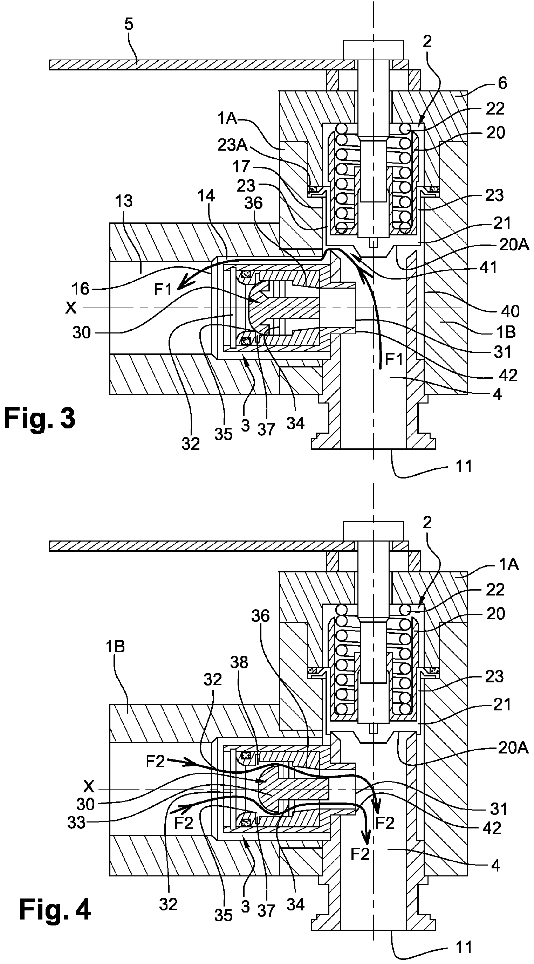

En regard des figures 3 et 4, le clapet 30 est apte à se déplacer parallèlement à l'axe d'agencement de la soupape X.

En position de repos et de fermeture (figures 2 et 3), le clapet 30 avec sa forme en champignon bute par sa tête 33 contre un rebord interne périphérique 35 situé du côté de l'extrémité 32 ouverte. Le rebord 35 forme ainsi le siège du clapet.

Le siège 35 est doté d'un joint d'étanchéité torique 37 pour assurer l'étanchéité du clapet en position fermée.

Le corps du clapet plus étroit que la tête est entouré du ressort 34 qui est maintenu entre ladite tête 33 et une partie interne du corps de la soupape. Le ressort 34 est en position de repos lorsque le clapet est fermé, tandis qu'il est comprimé lorsque le clapet est ouvert.

En position ouverte de la soupape (figure 4), la pression extérieure appuie sur la tête 33 du clapet, comprimant le ressort 34. Le corps du clapet 30 est dimensionné tel que au-delà du siège 35 en direction de l'extrémité 31, le clapet 30 soit à distance de la paroi interne 36 du corps de soupape de sorte à ménager un espace annulaire 38 entre ladite paroi et le clapet. En position ouverte de la soupape, l'air en provenance de l'extérieur peut ainsi passer au travers de celle-ci (flèches F2) par l'extrémité ouverte 32, puis l'espace annulaire 38 jusqu'à l'extrémité 31 pour déboucher dans la chambre 4.

A titre purement illustratif, le dispositif de l'invention peut présenter les dimensions suivantes en regard de la figure 6 :
- distance L1 séparant l'entrée 11 de l'extrémité supérieure du logement 1A sur laquelle est destiné à reposer le chapeau de fermeture 6 : de l'ordre de 50 mm ;
- diamètre extérieur D1 de la partie 1A : de l'ordre de 30 à 35 mm ;
- diamètre extérieur D2 de la partie 1B : de l'ordre de 25 mm ;
- diamètre intérieur D3 du conduit 13 : 20 mm ;
- longueur L2 de la partie 1B entre la sortie du conduit 13 et le coin de la partie 1A : 20 mm.

Par ailleurs, la partie 1B comprenant le conduit d'évacuation 13 est positionnée telle qu'illustrée sur la gauche de la partie 1A. Bien entendu, il est possible de fabriquer un dispositif au fonctionnement identique en disposant la partie 1B plutôt à droite. En fonction de l'emplacement du réservoir d'eau à protéger, de la place disponible autour du réservoir, de l'emplacement du tuyau d'évacuation d'eau, l'agencement des soupapes dans le corps du dispositif, la conception des parties 1A et 1B, et les dimensions seront adaptées.

Le fonctionnement du dispositif est le suivant.

En position montée du dispositif sur le réservoir d'eau, la chambre 4 est remplie d'eau.

Lorsque la pression au sein du réservoir d'eau est inférieure à une valeur de seuil, par exemple 6 bar, et supérieure à la pression atmosphérique, la soupape de surpression 2 est fermée, ainsi que la soupape anti-vide 3 tels qu'illustrés sur la figure 1, l'eau de la chambre 4 ne peut s'échapper et l'air ne peut s'introduire.

Lorsque la pression à l'intérieur du réservoir est supérieure à la valeur de seuil, la soupape de surpression 2 est ouverte (figure 3) permettant à l'eau de la chambre 4 de s'évacuer selon la flèche F1 vers l'extérieur du dispositif et donc du réservoir pour rétablir un équilibre de pression, tandis que la soupape anti-vide 3 reste fermée.

Lorsque la pression à l'intérieur du réservoir est inférieure à la valeur atmosphérique, c'est-à-dire que la pression à l'intérieur du réservoir est inférieure à l'air ambiant à l'extérieur du réservoir, on parle de dépression. Cela arrive notamment lorsque le réservoir ou ballon est situé en étage et que l'alimentation amont du ballon est coupée alors que l'on ouvre le robinet au point bas (pour « vidanger » en quelque sorte) ; la dépression est alors due à la colonne d'eau qui descend et crée le vide dans le ballon situé en étage.

En cas de dépression, l'eau qui est stockée dans la chambre 4 ne peut s'échapper, la soupape de surpression 2 restant fermée, tandis que la soupe anti-vide 3 s'ouvre (figure 4). En effet, la pression extérieure pousse sur la tête 33 du clapet 30, ouvrant le clapet et permettant à de l'air de s'introduire (flèches F2) dans le corps de la soupape anti-vide 3 jusqu'à son extrémité distale 31 qui débouche dans la chambre 4 via l'orifice d'accès 42 de la chambre. L'air s'introduit dans la chambre 4 est acheminé jusque dans le réservoir d'eau qui se remplit d'air jusqu'à ce l'équilibre de pression soit atteinte, ce qui referme automatiquement le clapet 30.

## Revendications

1. Dispositif de régulation de pression (1) pour réservoir d'eau comportant une chambre de détente (4) qui est dotée d'un orifice d'entrée (11) et d'un orifice de sortie (41), une soupape de sûreté de surpression (2) qui obture l'orifice de sortie (41) de ladite chambre et est apte à ouvrir ledit orifice de sortie en cas de surpression détectée, et un conduit d'évacuation (13) associé à la soupape de surpression qui communique avec la chambre (4) lorsque l'orifice de sortie de cette dernière est ouvert, et comportant en outre une soupape anti-vide (3) associée à la chambre de détente (4) et apte à permettre l'introduction d'air dans ladite chambre en cas de détection de dépression, et en ce que le dispositif présente un corps (10) dans lequel sont agencés la chambre (4), le conduit d'évacuation (13), la soupape de surpression (2) et la soupape anti-vide (3), le corps (10) formant un ensemble unitaire de façon à fournir un dispositif prêt à l'installation, **caractérisé en ce que** la soupape de surpression (2) est agencée dans le corps (10) selon un alignement avec la chambre de détente (4), tandis que le conduit d'évacuation (13) est disposé angulairement, par rapport à l'axe d'agencement de la soupape de surpression et de la chambre de détente (4).

2. Dispositif selon la revendication 1, **caractérisé en ce que** le corps (10) du dispositif formant un ensemble unitaire ne présente qu'une seule entrée (11) et qu'une seule sortie (12).

3. Dispositif selon la revendication 1 ou 2, **caractérisé en ce que** les soupapes de dépression (2) et anti-vide (3) sont intégrées au corps unitaire (10) du dispositif de sorte à être partiellement ou totalement invisibles depuis l'extérieur du corps.

4. Dispositif selon l'une quelconque des revendications précédentes, **caractérisé en ce que** la soupape de surpression (2) comporte un clapet de fermeture (20) coopérant de manière étanche avec un siège (40) formé par le rebord périphérique interne de la chambre de détente (4) au niveau de l'orifice de sortie (41) de ladite chambre, et un système mécanique à ressort (22) assurant la mobilité du clapet (20), le ressort étant taré à une valeur seuil de pression au-delà de laquelle le ressort est apte à se comprimer pour ouvrir le clapet qui n'est alors plus en contact avec le siège.

5. Dispositif selon l'une quelconque des revendications précédentes, **caractérisé en ce que** la soupape anti-vide (3) comporte un clapet mobile (30), coopérant de manière étanche avec un siège (35) en position de fermeture du clapet, et un système mécanique à ressort (34) assurant la mobilité du clapet, le ressort étant apte à être comprimé pour ouvrir le clapet lorsque la pression atmosphérique est supérieure à la pression régnant dans le réservoir auquel est destiné à être associé le dispositif, la soupape anti-vide (3) étant connectée avec la chambre de détente (4) via un orifice d'accès (42) agencée dans la paroi de la chambre.

6. Dispositif selon l'une quelconque des revendications précédentes, **caractérisé en ce que** le conduit d'évacuation (13) est disposé perpendiculairement à l'axe d'agencement de la soupape de surpression et de la chambre.

7. Dispositif selon l'une quelconque des revendications précédentes, **caractérisé en ce que** le conduit d'évacuation (13) est agencé à proximité de l'orifice de sortie (41) de la chambre.

8. Dispositif selon l'une quelconque des revendications précédentes, **caractérisé en ce que** le corps (10) comporte deux logements d'accueil distincts (1A, 1B) pour respectivement la soupape de surpression (2) et la soupape anti-vide (3), notamment la soupape anti-vide étant logée dans le conduit d'évacuation (13) ou en prolongement et à l'opposé du conduit d'évacuation (13) ou encore perpendiculairement ou avec un angle quelconque par rapport au conduit d'évacuation (13).

9. Dispositif selon l'une quelconque des revendications précédentes, **caractérisé en ce que** le conduit d'évacuation (13) présente la fonction d'écoulement d'eau depuis la chambre (4) vers l'extérieur du dispositif, et également d'alimentation en air depuis l'extérieur du dispositif vers la chambre (4).

10. Utilisation du dispositif selon l'une quelconque des revendications précédentes en étant raccordé par l'orifice d'entrée (11) à un réservoir de liquide, en particulier un ballon d'eau chaude.

## Patentansprüche

1. Vorrichtung für die Druckregelung (1) von Wasserspeichern mit einer Druckminderungskammer (4), die mit einer Eingangsöffnung (11) und einer Ausgangsöffnung (41) ausgestattet ist, mit einem der Sicherheit dienenden Überdruckventil (2), das die Ausgangsöffnung (41) der Kammer verschließt und das sich dazu eignet, die Ausgangsöffnung im Fall eines auftretenden Überdrucks freizugeben, und mit einer Entleerungsleitung (13), die dem Überdruckventil zugeordnet ist und mit der Kammer (4) in Verbindung steht, wenn die Ausgangsöffnung von letzterer offen ist, und ferner mit einem Belüftungsventil (3), das der Druckminderungskammer (4) zugeordnet ist und dazu geeignet ist, das Einführen von Luft in die Kammer im Fall eines auftretenden Unterdrucks zu gestatten, wobei die Vorrichtung einen Körper (10) aufweist, in dem die Kammer (4), die Entleerungsleitung (13), das Überdruckventil (2) und das Belüftungsventil (3) ausgebildet sind und der Körper (10) eine einheitliche Baugruppe bildet, um auf diese Weise eine für die Installation bereite Vorrichtung zu schaffen, **dadurch gekennzeichnet, dass** das Überdruckventil (2) auf die Druckminderungskammer (4) ausgerichtet in dem Körper (10) ausgebildet ist, während die Entleerungsleitung (13) bezüglich der Bauachse des Überdruckventils und der Kammer im Winkel angeordnet ist.

2. Vorrichtung nach Anspruch 1, **dadurch gekennzeichnet, dass** der Körper (10) der Vorrichtung, die eine einheitliche Baugruppe bildet, nur einen einzelnen Einlass (11) und nur einen einzelnen Auslass (12) aufweist.

3. Vorrichtung nach Anspruch 1 oder 2, **dadurch gekennzeichnet, dass** das Unterdruckventil (2) und das Belüftungsventil (3) in den einheitlichen Körper (10) der Vorrichtung so integriert sind, dass diese von außerhalb des Körpers teilweise oder vollständig unsichtbar sind.

4. Vorrichtung nach einem der vorhergehenden Ansprüche, **dadurch gekennzeichnet, dass** das Überdruckventil (2) eine Schließklappe (20) aufweist, die auf dichte Weise mit einem Sitz (40) zusammenwirkt, der am äußeren internen Rand der Druckminderungskammer (4) im Bereich der Ausgangsöffnung (41) der Kammer ausgebildet ist, und dass ein mechanisches Federsystem (22) die Beweglichkeit der Klappe (20) sicherstellt, wobei die Feder auf einen Druckschwellwert eingestellt ist, oberhalb dessen die Feder in der Lage ist, sich zu komprimieren, um die Klappe zu öffnen, die dann nicht mehr in Kontakt mit dem Sitz steht.

5. Vorrichtung nach einem der vorhergehenden Ansprüche, **dadurch gekennzeichnet, dass** das Belüftungsventil (3) eine bewegliche Klappe (30) aufweist, die in der geschlossenen Stellung der Klappe auf dichte Weise mit einem Sitz (35) zusammenwirkt, und ein mechanisches Federsystem (34) aufweist, das die Beweglichkeit der Klappe gewährleistet, wobei die Feder in der Lage ist, komprimiert zu werden, um die Klappe zu öffnen, wenn der Umgebungsdruck größer als der in dem Speicher herrschende Druck ist, für den die Vorrichtung vorgesehen ist, wobei das Belüftungsventil (3) mit der Druckminderungskammer (4) durch eine Zugangsöffnung (42) verbunden ist, die in der Wand der Kammer ausgebildet ist.

6. Vorrichtung nach einem der vorhergehenden Ansprüche, **dadurch gekennzeichnet, dass** die Entleerungsleitung (13) im rechten Winkel zur Bauachse des Druckventils der Kammer angeordnet ist.

7. Vorrichtung nach einem der vorhergehenden Ansprüche, **dadurch gekennzeichnet, dass** die Entleerungsleitung (13) in der Nähe der Ausgangsöffnung (41) der Kammer ausgebildet ist.

8. Vorrichtung nach einem der vorhergehenden Ansprüche, **dadurch gekennzeichnet, dass** der Körper (10) zwei unterschiedliche Aufnahmen (1A, 1B), jeweils für das Überdruckventil (2) und das Belüftungsventil (3), aufweist, wobei insbesondere das Belüftungsventil in der Entleerungsleitung (13) oder in der Verlängerung oder gegenüber der Entleerungsleitung (13) oder im rechten Winkel oder in irgendeinem Winkel bezüglich der Entleerungsleitung (13) angeordnet ist.

9. Vorrichtung nach einem der vorhergehenden Ansprüche, **dadurch gekennzeichnet, dass** die Entleerungsleitung (13) die Funktion eines Ablaufs von Wasser aus der Kammer (4) nach außerhalb der Vorrichtung bietet und gleichermaßen die Zufuhr von Luft von außerhalb der Vorrichtung in die Kammer (4) bietet.

10. Verwendung der Vorrichtung nach einem der vorhergehenden Ansprüche, indem diese über die Eingangsöffnung (11) an einem Flüssigkeitsspeicher, insbesondere einem Warmwasserspeicher angeschlossen wird.

## Claims

1. A pressure regulation device (1) for a water reservoir, comprising an expansion chamber (4) that is provided with an inlet orifice (11) and an outlet orifice (41), an overpressure safety valve (2) that closes off the outlet orifice (41) of said chamber and is able to open said outlet orifice in the event of overpressure detected, and a discharge pipe (13) associated with the overpressure valve that communicates with the chamber (4) when the outlet orifice of the latter is open, and further comprising an anti-vacuum valve (3) associated with the expansion chamber (4) and able to allow the introduction of air into said chamber in the event of detection of negative pressure, and in that the device has a body (10) in which there are arranged the chamber (4), the discharge pipe (13), the overpressure valve (2) and the anti-vacuum valve (3), the body (10) forming a unitary assembly so as to provide a device ready for installation, **characterised in that** the overpressure valve (2) is arranged in the body (10) in an alignment with the expansion chamber (4), while the discharge pipe (13) is disposed angularly with respect to the axis on which the overpressure valve and the chamber are arranged.

2. A device according to claim 1, **characterised in that** the body (10) of the device forming a unitary assembly has only one inlet (11) and only one outlet (12).

3. A device according to claim 1 or claim 2, **characterised in that** the negative-pressure (2) and anti-vacuum (3) valves are integrated in the unitary body (10) of the device so as to be partially or totally invisible from the outside of the body.

4. A device according to any of the preceding claims, **characterised in that** the overpressure valve (2) comprises a closure shutter (20) cooperating sealingly with a seat (40) formed by the internal peripheral rim of the expansion chamber (4) at the outlet orifice (41) of said chamber, and a mechanical spring system (22) providing the mobility of the shutter (20), the spring being calibrated at a pressure threshold value beyond which the spring is able to compress in order to open the shutter, which is then no longer in contact with the seat.

5. A device according to any of the preceding claims, **characterised in that** the anti-vacuum valve (3) comprises a movable shutter (30), cooperating sealingly with a seat (35) in the closed position of the shutter, and a mechanical spring system (34) providing the mobility of the shutter, the spring being able to be compressed in order to open the shutter when the atmospheric pressure is greater than the pressure prevailing in the reservoir with which the device is intended to be associated, the anti-vacuum valve (3) being connected to the expansion chamber (4) via an access orifice (42) arranged in the wall of the chamber.

6. A device according to any of the preceding claims, **characterised in that** the discharge pipe (13) is disposed perpendicular to the axis on which the overpressure valve and the chamber are arranged.

7. A device according to any of the preceding claims, **characterised in that** the discharge pipe (13) is arranged in the vicinity of the outlet orifice (41) of the chamber.

8. A device according to any of the preceding claims, **characterised in that** the body (10) comprises two distinct accommodating housings (1A, 1B) for respectively the overpressure valve (2) and the anti-vacuum valve (3), in particular the anti-vacuum valve being housed in the discharge pipe (13) or in line with and opposite to the discharge pipe (13) or perpendicular or at any angle with respect to the discharge pipe (13).

9. A device according to any of the preceding claims, **characterised in that** the discharge pipe (13) has the function of flow of water from the chamber (4) to the outside of the device, and also supply of air from the outside of the device to the chamber (4).

10. Use of the device according to any of the preceding claims, while being connected by the inlet orifice (11) to a liquid reservoir, in particular a hot-water receiver.
